# EUROPÄISCHE PATENTANMELDUNG

(11) **EP 1 122 487 A2**
(43) Veröffentlichungstag der Anmeldung: **08.08.2001**
(21) Anmeldenummer: 01102149.0
(22) Anmeldetag: 01.02.2001
(51) Int. Cl.: F21V 8/00

(54) **Bauelemente mit Lichtübertragungsmedium**

(30) Priorität: 03.02.2000 DE 10004783
(71) Anmelder: I.D. GmbH Konzepte für Innovation und Design, 42799 Leichlingen (DE)
(72) Erfinder: Schumacher, Karl Heinz, 42799 Leichlingen (DE)
(74) Vertreter: Patentanwälte Lippert, Stachow, Schmidt & Partner

(57) **Zusammenfassung**

Die Erfindung bezieht sich auf Innen- und/oder Außenbereich-Bauelemente (1) mit Signal- und Hinweisfunktion aus einem lichtundurchlässigen Material (2).

Um bei derartigen Bauelementen, welche eine Signal- und Hinweisfunktion auch bei schlechten Sichtverhältnissen und in exponierten, beispielsweise explosionsgefährteten Bereichen, bereitstellen zu können, wird vorgeschlagen, dass das Bauelement (1) aus einem lichtundurchlässigen Material besteht mit einem vorgegebenen, lichtabstrahlenden Oberflächenabschnitt (3), der durch eine Grenzfläche eines sich in das Bauelement hinein erstreckenden Lichtübertragungsmediums (2) gebildet wird, wobei das Lichtübertragungsmedium beabstandet zum lichtabstrahlenden Oberflächenabschnitt einen ersten Abschnitt (4) aufweist, an welchem elektromagnetische Strahlung aufnehmbar ist und einen zweiten Abschnitt (5), in welchem Licht zum lichtabstrahlenden Oberflächenabschnitt führbar ist.

## Beschreibung

Die Erfindung betrifft Innen- und/oder Außenbereich-Bauelemente mit Signal- und Hinweisfunktion aus einem lichtundurchlässigen Material. In vielen Bereichen des Innen- als auch des Außenausbaus werden Bauelemente verwendet, die eine Signal- oder Hinweisfunktion ausüben. Beispielsweise können die Kanten von Treppenstufen oder auch andere Kanten oder Teile beliebiger Bauelemente farbig gestaltet sein, um auf eventuelle Gefahren aufmerksam zu machen bzw. eine Hinweisfunktion auszuführen. Ein derartiger Signal- oder Hinweischarakter eines Bauelements wird jedoch bei beeinträchtigten Lichtverhältnissen, beispielsweise während der Dämmerung oder bei Dunkelheit, stark eingeschränkt. Eine Lösung des Problems kann darin bestehen, die entsprechenden Orte so auszuleuchten, dass die farbigen Markierungen auf den Bauelementen immer erfassbar bleiben. Eine derartige Beleuchtung ist jedoch sehr kostenintensiv bzw. kann insbesondere im Außenbereich an Stellen, an welchen keine Energiequelle zur Speisung der Beleuchtungsvorrichtung vorhanden ist, nicht eingesetzt werden. Weiterhin ist häufig in Sicherheitsabschnitten sowohl im Innen- als auch im Außenbereich die Verwendung von unter Umständen funkenerzeugenden Beleuchtungsvorrichtungen strikt verboten.

Somit besteht die Aufgabe der Erfindung darin, Bauelemente sowohl für den Innen- als auch für den Außenbereich bereitzustellen, welche eine Signal- und Hinweisfunktion ausüben können, und die beschriebenen Nachteile von Bauelementen des Standes der Technik zumindest teilweise zu beheben.

Diese Aufgabe löst die Erfindung schon mit einem Bauelement aus einem lichtundurchlässigen Material und einem vorgegebenen lichtabstrahlenden Oberflächenabschnitt, der durch eine Grenzfläche eines sich in das Bauelement hinein erstreckenden Lichtübertragungsmediums gebildet wird, wobei das Lichtübertragungsmedium beabstandet zum lichtabstrahlenden Oberflächenabschnitt einen ersten Abschnitt aufweist, an welchem elektromagnetische Strahlung aufnehmbar ist, und einen zweiten Abschnitt, in welchem Licht zum lichtabstrahlenden Oberflächenabschnitt führbar ist.

Der Erfindung liegt die Idee zu Grunde, dass die beschriebenen neuralgischen Punkte an oder in der Nähe der Bauelemente nicht selbst beleuchtet werden, sondern dass von den Bauelementen selbst zumindest soviel Licht abgegeben wird, dass sie auch bei beeinträchtigten Sichtverhältnissen, insbesondere bei Dämmerung oder Dunkelheit, leicht wahrgenommen werden können. Da das Licht an die Oberfläche des Bauelements geführt wird, ist weiterhin sichergestellt, dass kein auf die Lichterzeugung zurückzuführender Effekt, beispielsweise eine Funkenbildung, eine negative Auswirkung für den Aufstellort des erfindungsgemäßen Bauelements besitzt. Diese Bauelemente eignen sich damit auch hervorragend für den Einsatz in explosionsgefährdeten Räumen.

Die Erfindung kann grundsätzlich für alle Bauelemente mit Hinweis- bzw. Signalfunktion, z.B. für Sicherheits- oder Gefahrenabschnitte bzw. zur Realisierung von Hinweis- und Leitsystemen sowohl im Innenbereich als auch im Außenbereich, verwendet werden. Dies betrifft beispielsweise Sitzelemente, Säulen, Poller, Pflasterelemente, Wandelemente, Absperrelemente, Treppenstufen, Handläufe, Leitelemente etc. Die Grundmaterialien der erfindungsgemäßen Bauelemente sind dabei nicht auf bestimmte Baustoffe beschränkt, sondern können insbesondere Natur- und Betonstein, Metall, Holz, Glas oder auch Kunststoffe umfassen. Vorteilhafterweise können die erfindungsgemäßen Bauelemente zusätzlich auch einen ästhetisch ansprechenden Charakter aufweisen.

Um elektromagnetische Strahlung in das Lichtübertragungsmedium einzubringen, kann vorgesehen sein, dass benachbart zum ersten Abschnitt des Lichtübertragungsmediums ein Mittel zum Erzeugen von elektromagnetischer Strahlung angeordnet ist, wobei die vom Mittel erzeugte elektromagnetische Strahlung wenigstens teilweise vom ersten Abschnitt des Lichtübertragungsmediums aufnehmbar ist. Die aufgenommene Strahlung wird über den zweiten Abschnitt des Lichtübertragungsmediums zum lichtabstrahlenden Oberflächenabschnitt zur Abgabe von sichtbarem Licht geführt werden. Erfindungsgemäß wird das Licht bzw. die elektromagnetische Strahlung im Lichtübertragungsmedium geführt, wobei dieser Transport allgemein die Transmission des Lichts durch das Mediums umfasst und auch spezifische optische Effekte wie die Totalreflexion oder die Streuung eine Rolle spielen können. Um an solchen Stellen, an welchen das Lichtübertragungsmedium am lichtundurchlässigen Material anliegt, zu verhindern, dass die Totalreflexion vermindert oder gar gestoppt wird, kann vorgesehen sein, dass an den zugeordneten Seitenflächen des Lichtübertragungsmediums ein Material mit einem niedrigerem Brechungsindex als der Brechungsindex des lichtführenden Abschnitts des Lichtübertragungsmediums umfasst ist. Grundsätzlich ist die Fläche des lichtabstrahlenden Oberflächenabschnitts viel kleiner als die gesamte Oberfläche des Bauelements, insbesondere kleiner als 10 %.

Als Mittel zum Erzeugen und Abgeben der elektromagnetischen Strahlung sind grundsätzlich alle Strahlungsquellen möglich, insbesondere energiesparende Strahlungsquellen. Im allgemeinen sind keine starken Lichtquellen notwendig, da keine Beleuchtung eines Raums oder eines Gegenstands realisiert sondern nur ein relativ schwaches Licht, das aus der beschriebenen Grenzfläche austritt, bereitgestellt werden muss. Beispielsweise können Halogenlampen, Leuchtstofflampen oder auch Dioden und Glimmlampen Verwendung finden. In spezifischen Ausführungsformen der Erfindung kann das Lichtübertragungsmedium eine fluoreszierende Substanz, insbesondere eine Phosphorverbindung, aufweisen, welche die im ersten Abschnitt des Lichtübertragungsmediums aufgenommene elektromagnetische Strahlung in Licht mit einer höheren im Sichtbaren liegenden Wellenlänge umwandelt. Damit kann erreicht werden, dass am lichtabstrahlenden Oberflächenabschnitt immer Licht einer bestimmten Wellenlänge emittiert wird, unabhängig von der verwendeten Strahlungsquelle. Adäquate Strahlungsqellen wie eine Quecksilberniederdrucklampe emittieren dabei Licht mit einer hohen Frequenz, insbesondere Licht im UV.

Als Lichtübertragungsmedium ist jedes optisch transparente Material, insbesondere ein Kunststoffmaterial, gut geeignet, welches leicht formbar und herstellbar ist sowie eine gute mechanische und optische Langzeitstabilität aufweist.

Zur Abgabe von Licht bestimmter Frequenz kann auch vorgesehen sein, dass das Lichtübertragungsmedium entsprechend gefärbt ist und somit Weißlichtquellen verwendet werden können, wobei die unerwünschten Frequenzbestandteile vom Lichtübertragungsmedium absorbiert werden.

Um ein einfaches Auswechseln des Strahlungsmittels bereitzustellen, kann vorgesehen sein, dass das Mittel zum Erzeugen der elektromagnetischen Strahlung zusammen mit dem zweiten Abschnitt des Lichtübertragungsmediums in einem geschlossenen und leicht zugänglichen Hohlraum angeordnet ist.

Um eine möglichst homogene Abstrahlung von Licht an der Grenzfläche des lichtabstrahlenden Oberflächenabschnitts bereitzustellen, kann vorgesehen sein, dass das Lichtübertragungsmedium im zweiten Abschnitte aufgerauhte, lichtstreuende Oberflächen aufweist. In diesem Fall wird das Licht unabhängig von einer Totalreflexion an den Seitenflächen des Lichtübertragungsmediums innerhalb diesem geführt.

Zur Verstärkung des Leuchteffekts an der Grenzfläche des sich in das Bauelement hinein erstreckenden Lichtübertragungsmediums kann vorgesehen sein, dass diese aus der Oberfläche des lichtundurchlässigen Materials herausragt. Damit wird erreicht, dass Umgebungslicht von aus dem Körper des Bauelements herausragenden Seitenflächen empfangen und insbesondere über den Effekt der Totalreflexion an die lichtabgebende Grenzfläche geführt wird, wodurch eine Signal- bzw. Hinweisfunktion allein mit dem üblicherweise schon vorhandenen Umgebungslicht realisiert sein kann bzw. bei der Verwendung einer schwachen Strahlungsquelle die Leuchtintensität an der Grenzfläche abhängig von den Umgebungsbedingungen zumindest leicht heraufgesetzt werden kann.

Besonders vorteilhaft ist es, wenn das Strahlungsmittel eine längliche Ausdehnung besitzt und somit als Quelle über eine vorgegebene Strecke dienen kann. Diese Eigenschaft besitzen beispielsweise sogenannte herkömmliche "Lichtschläuche", die eine Vielzahl von in einer Reihe angeordneter Leuchtmittel, z.B. Glimmlampen oder LEDs, aufweisen, welche eine einzelne, gemeinsame Stromversorgung besitzen. Diese "Lichtschläuche" sind einfach handhab- und austauschbar. Das Eingießen der einzelnen Leuchtmittel in den durchsichtigen "Lichtschlauch" stellt einen besonderen Schutz dar, der z.B. eine schnelle Verlegung ermöglicht.

Um ein Bauelement für ein Boden-Pflaster bereitzustellen, kann vorgesehen sein, dass das Bauelement ein U-förmiges, längliches Metallprofil umfasst, zwischen dessen Schenkeln ein Lichtübertragungsmedium angeordnet ist, wobei das Profil und das Lichtübertragungsmedium einen Hohlraum in Längserstreckung des Profils bilden, in welchem das Mittel zum Abstrahlen von elektromagnetischer Strahlung angeordnet ist. Durch eine entsprechende Gestaltung von Flanschen und/oder Ankern an das Bauelement kann erreicht werden, dass dieses durch benachbarte Pflastersteine innerhalb des Pflastergefüges fixiert ist.

Das aus dem Pflaster lichtabgebende Profil kann beispielsweise als Leit- oder Navigationsmittel verwendet werden, das insbesondere auch begehbar bzw. von Fahrzeugen überfahrbar ist. Zur Einkopplung des Lichts in das Lichtübertragungsmedium innerhalb des U-förmigen Metallprofils kann vorgesehen sein, dass das Lichtübertragungsmedium auf der dem Leuchtmittel zugewandten Seite zwei aufeinander zulaufende Kanten aufweist. Um zu verhindern, dass direktes Licht am lichtabgebenden Abschnitt emittiert wird, kann das sich längs erstreckende Leuchtmittel auch abgedeckt sein. Ferner kann es jedoch auch möglich sein, dass sich das Lichtübertragungsmedium bis zur Basis des U-förmigen Metallprofils erstreckt, während die beiden Schenkel innen zur Basis zurück verlaufende Abschnitte aufweisen, an denen das Lichtübertragungsmedium anliegt, sodass jeweils eine Längsseitenwand des Lichtübertragungsmediums zusammen mit einem Außenschenkel des U-Profils einen Hohlraum bildet, der hervorragend zur Aufnahme der schon beschriebenen hintereinander angeordneten Leuchtmittel geeignet ist. Dadurch wird erreicht, dass Licht aus zwei, jeweils seitlich mit einem Leuchtmittel bestückten Hohlraum in das Lichtübertragungsmedium eintreten kann und von diesen zur Grenzfläche des lichtabstrahlenden Oberflächenabschnitts geführt wird. Da sich das Lichtübertragungsmedium bis auf die Basis des Metallprofils erstreckt, kann das Lichtübertragungsmedium nicht durch eine übermäßige Gewichtsauflage nach innen gedrückt werden. Zwar ist die Einkopplung des Lichts in das Lichtübertragungsmedium im Vergleich zur ersten Ausführungsform u.U. vermindert, die Intensität des das Bauelement an der Grenzfläche verlassenden Lichts reicht jedoch vollkommen aus, um die gewünschte Signal- und Hinweisfunktion auszuüben.

Die Erfindung eignet sich auch hervorragend zur Kennzeichnung von Stolper-Gefahrenbereichen, insbesondere von Treppenstufen, wobei der lichtemittierende Oberflächenabschnitt sowohl in der Treppenstufe selbst als auch in der Vorderfläche der Treppe angeordnet sein kann. Vorteilhafterweise ist dabei das Lichtübertragungsmedium mit einer Kantenfläche zur zugeordneten Treppenfläche bündig angeordnet und erstreckt sich beispielsweise senkrecht in die Treppenstufe und in einen innerhalb der Treppenstufe angeordneten Hohlraum hinein, der sich in Längsrichtung der Treppenstufe erstreckt. Für diesen Zweck kann das Lichtübertragungsmedium sowohl mehrteilig als auch einteilig für eine einzelne Stufe ausgestaltet sein. Beispielsweise können brettförmige, kammförmige oder auch mehrere zylinderförmige Lichtübertragungsmedien für eine einzelne Stufe zum Einsatz kommen. In jedem Fall ist es vorteilhaft, wenn innerhalb der Treppenstufe ein einzelner Hohlraum ausgestaltet ist, der für die Einkopplung von Licht in das einzelne oder auch in das mehrteilige Lichtübertragungsmedium verwendet werden kann. Ist das verwendete Lichtübertragungsmedium einteilig, kann dieses leicht in die Treppe eingesetzt werden, z.B. wenn die Treppe gegossen wird.

Insbesondere bei zylinderförmigen Bauelementen, beispielsweise Pollern, kann das Lichtübertragungsmedium eine scheibenförmige Gestalt aufweisen, wobei die Achse der Scheibe mit der Zylinderachse des Bauelements zusammenfallen kann, sodass das Lichtübertragungsmedium an den Seitenflächen vom zylinderförmigen Bauelement umgeben ist, während die lichtabgebende Umfangsfläche entweder bündig mit dem Umfang des Bauelements angeordnet ist oder davon abgesetzt ist. Zum Anordnen eines Leuchtmittels innerhalb des Bauelements kann das Bauelement und/oder das Lichtübertragungsmedium eine Mittenausnehmung aufweisen. Derartige zylinderförmige Bauelemente eignen sich auch hervorragend für die Verwendung von mehreren derartigen scheibenförmigen Lichtübertragungsmedien, die beispielsweise eine unterschiedliche Farbe abstrahlen und auf der Achse des Bauelements übereinander angeordnet sind, womit komplexere Hinweis- und Signalinformationen abgebbar sind. Zu diesem Zweck können den verschiedenen Scheiben zugeordnete Lichtquellen elektrisch unabhängig voneinander ansteuerbar sein oder die Scheiben unterschiedliche Farben aufweisen. Zur Erzeugung von punktförmigen optischen Signalisierungen kann das Bauelement auch zylinderförmige Stäbe des Lichtübertragungsmediums aufweisen, die senkrecht zur Achse des zylinderförmigen Bauelements angeordnet sind.

Um ein erfindungsgemäßes Bauelement ohne die Notwendigkeit der Speisung mit einer externen Stromversorgung bereitzustellen, kann vorgesehen sein, dass ein Mittel zum Zuführen von Umgebungslicht an den ersten Abschnitt des Lichtübertragungsmediums umfasst ist. Wird über eine große Fläche des ersten Abschnitts des Lichtübertragungsmediums das Umgebungslicht durch ein Fenster hindurch gesammelt, kann dieses Licht, beispielsweise mittels einer Lichtführung über Totalreflexion, konzentriert an der Grenzfläche des lichtabstrahlenden Oberflächenabschnitts des Bauelements abgegeben werden.

Zur besseren Einkopplung der Strahlung oder des Lichts in den ersten Abschnitt des Lichtübertragungsmediums kann vorgesehen sein, dass lichtbrechende bzw. lichtreflektierende Einrichtungen verwendet werden, wodurch sich der Wirkungsgrad eines erfindungsgemäßen Bauelements stark erhöhen kann.

Ist die zum Zwecke der Signalwirkung lichtabgebende Oberfläche des Lichtübertragungsmediums einer verstärkten mechanischen Belastung ausgesetzt, so kann diese Grenzfläche hartbeschichtet sein.

Die Erfindung wird im Folgenden durch das Beschreiben einiger Auführungsformen unter Bezugnahme auf die beiliegenden Zeichnungen erläutert, wobei
- Fig. 1: eine gemäß der Erfindung ausgebildete Treppenstufe zeigt,
- Fig. 2: eine zweite Ausführungsform einer erfindungsgemäß ausgestalteten Treppenstufe zeigt,
- Fig. 3: eine dritte Ausführungsform einer erfindungsgemäß ausgestalteten Treppenstufe zeigt,
- Fig. 4: in einer Querschnittsdarstellung ein sich längs erstreckendes erfindungsgemäßes Bauelement für ein Boden-Pflaster darstellt,
- Fig. 5: eine weitere Ausführungsform eines erfindungsgemäßen Bauelements für ein Boden-Pflaster darstellt,
- Fig. 6: einen gemäß der Erfindung ausgebildeten Handlauf zeigt,
- Fig. 7: ein erfindungsgemäßes quaderförmiges Wand-Bauelement zeigt und
- Fig. 8: eine gemäß der Erfindung ausgestaltete quaderförmige Säule darstellt.

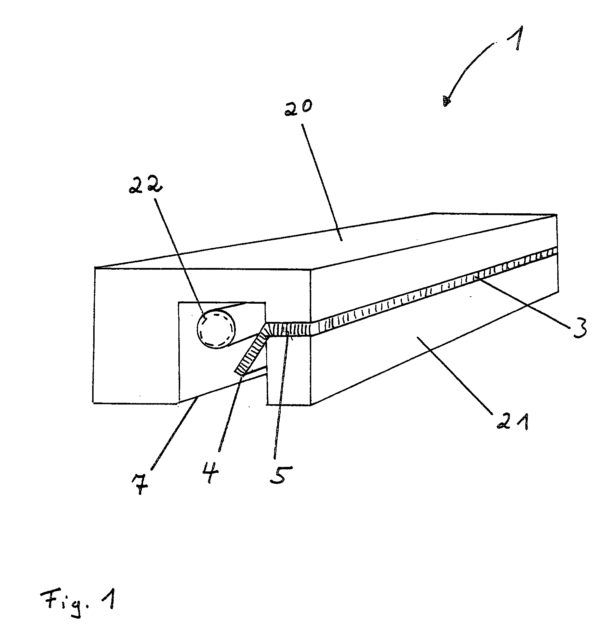

Fig. 1 stellt eine bestimmte Ausführungsform des erfindungsgemäßen Bauelements in Form einer Treppenstufe dar, wobei diese Treppenstufe sowohl für den Innenbereich als auch für den Außenbereich geeignet ist. Die Treppenstufe ist mit einer Trittfläche 20 und einer Vorderfläche 21 aus Beton gegossen. Im Innern der Stufe ist ein Hohlraum 7 gestaltet, der seitlich zugänglich ist. Das Lichtübertragungsmedium aus einem durchsichtigen Kunststoffmaterial ist mit seiner Grenzfläche 3 bündig zur Vorderfläche 21 angeordnet. Das brettförmige Lichtübertragungsmedium umfasst einen ersten Abschnitt 4 sowie einen zweiten Abschnitt 5, die über einen Winkelabschnitt miteinander verbunden sind. Das gesamte Lichtübertragungsmedium, das sich längs der gesamten Treppenstufe erstreckt, kann beispielsweise über ein Spritzgussverfahren hergestellt werden. Der zweite Abschnitt 4 des Lichtübertragungsmediums ragt in den Hohlraum 7 hinein. Im Hohlraum 7 ist weiterhin entlang der gesamten Längserstreckung der Treppenstufe eine schlauchförmige Leuchteinrichtung 22 angeordnet, welche eine Vielzahl von in Reihe angeordneter Glimmlampen umfasst. Die elektrische Leuchteinrichtung 22 ist in nicht dargestellter Weise an eine Spannungsversorgung von 230 Volt Wechselspannung angeschlossen. Die benötigte elektrische Leistung beträgt in der Größenordnung von 1 Watt pro Meter Längsausdehnung des "Lichtschlauchs". In einer weiteren Ausführungsform der Erfindung kann das Bauelement auch ein "Lichtschlauch" von hintereinander angeordneten Leuchtdioden aufweisen, wobei der Energieverbrauch gegenüber dem erstbeschriebenen "Lichtschlauch" erheblich niedriger liegt.

Das von den Glimmlampen bzw. den Leuchtdioden emittierte Licht fällt auf den in den Hohlraum weisenden Abschnitt 4 des Lichtübertragungsmediums auf, dringt größtenteils ein und wird zumindest teilweise innerhalb des Lichtübertragungsmediums zur Grenzfläche 3 an der Vorderfläche 21 der Treppe übertragen, wo das Licht zum Realisieren einer Signal- und Hinweisfunktion austritt. Um zu verhindern, dass an der Verbindungsstelle der beiden Abschnitte 4 und 5 des Lichtübertragungsmediums ein großer Anteil des eingekoppelten Lichts wieder ausgekoppelt wird, kann die Verbindungskante der beiden Abschnitte abgerundet sein. Um ferner die Lichtführung im Kunststoffmaterial zu unterstützen, sind in einer besonderen Ausführungsform der Erfindung die Großflächen des in Fig. 1 dargestellten Lichtübertragungsmediums mit einem Material beschichtet, welches einen niedrigeren Brechungsindex als das Lichtübertragungsmedium aufweist, sodass eine Totalreflexion an diesen großen Seitenflächen ermöglicht wird und somit das in Abschnitt 4 aufgenommene Licht zu einem wesentlichen Anteil an den lichtabstrahlenden Oberflächenabschnitt 3 transportiert werden kann.

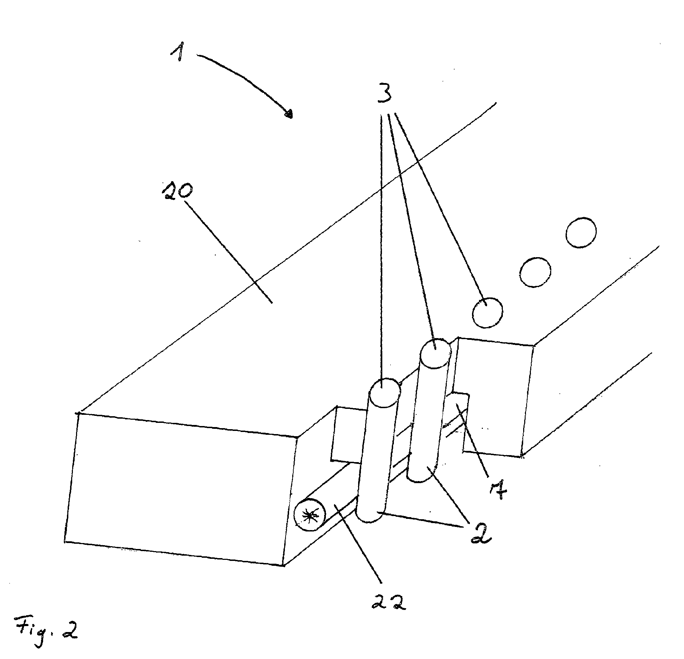

Fig. 2 zeigt in einer aufgebrochenen Darstellung eine weitere Treppenstufe als Bauelement 1 gemäß der Erfindung, wobei der lichtabgebende Abschnitt 3 nicht in der Vorderfläche sondern in der Trittfläche 20 liegt. Da die Abschnitte 3 als Teil der Trittfläche dienen, sind diese hartversiegelt.

Entlang der Längskante sind in äquidistanten Abständen zylinderförmige Lichtübertragungsmedien 2 angeordnet, die sich in die Treppenstufe hinein bis in den Hohlraum 7 erstrecken, welcher eine schon beschriebene schlauchförmige Lichtquelle 22 mit einer Vielzahl von LEDs aufweist. Dieser einzelne "Lichtschlauch" versorgt demnach alle einzelnen Lichtübertragungsmedien mit Licht, das an die jeweiligen Grenzflächen führbar ist.

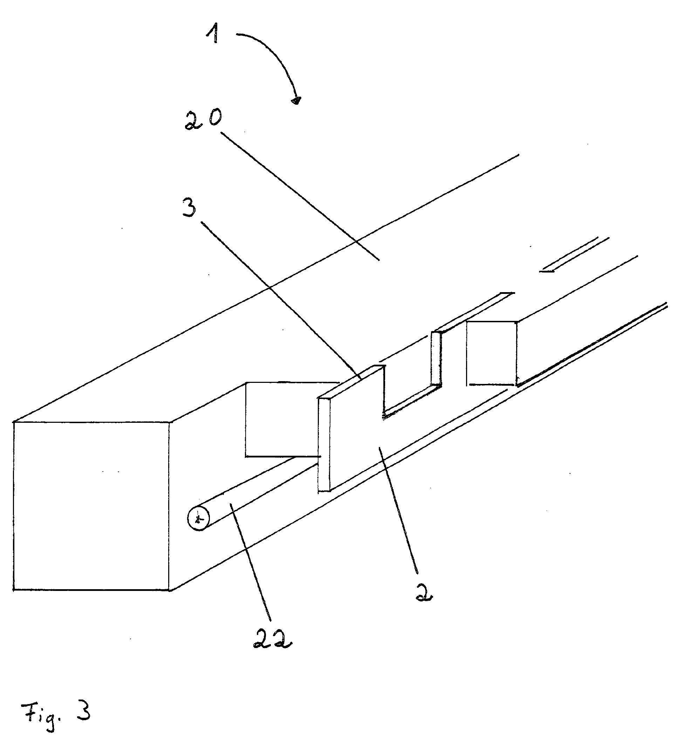

In Fig. 3 ist eine dritte Ausführungsform einer Treppenstufe gemäß der Erfindung dargestellt. Das Lichtübertragungsmedium 2 weist hier eine brettartige Gestalt auf, wobei in äquidistanten Abständen Ausbrüche geformt sind, sodass sich eine kammartige Struktur ergibt. Die Endflächen der Kammzinken entsprechen den lichtabstrahlenden Oberflächenabschnitten 3. Das Licht wird wieder von LEDs in einem "Lichtschlauch" 22 emittiert und vom unteren Abschnitt des Lichtübertragungsmediums aufgenommen und zur Grenzfläche 3 übertragen, sodass ein Betrachter in Längserstreckung parallel zur Kante der Treppe leuchtende und äquidistant beabstandete Rechtecke sieht, wodurch die gewünschte Hinweisfunktion realisiert ist. Die beschriebenen Treppenstufen können insbesondere in abgedunkelt benutzten Räumlichkeiten wie Kinos oder dergleichen verwendet werden.

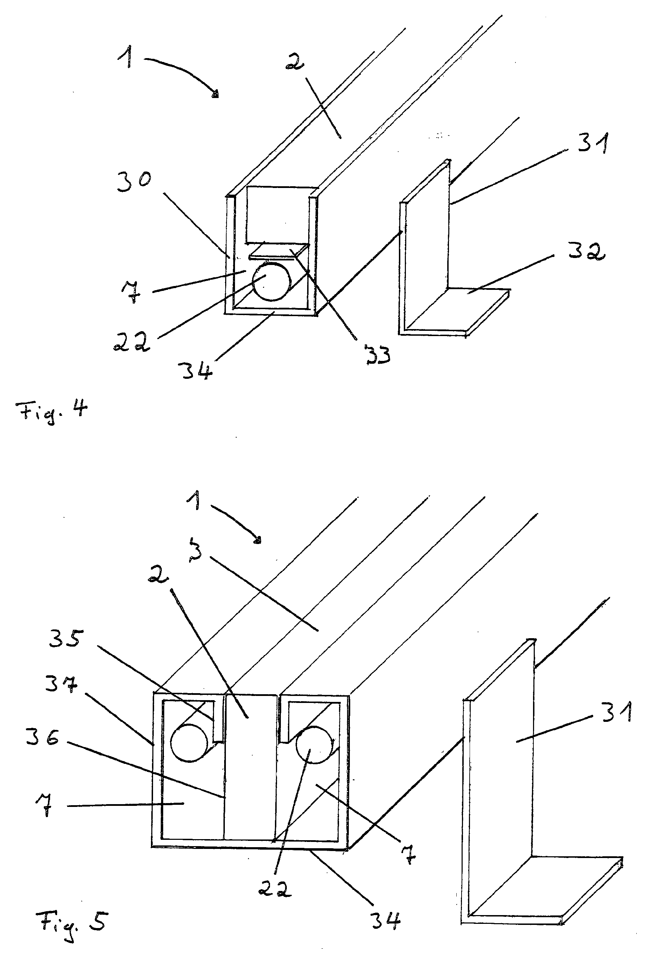

Einen ganz anderen Bereich deckt das in Fig. 4 dargestellte erfindungsgemäße Bauelement in Form eines U-Profils aus Corten-Stahl ab, welches in ein Pflaster einlegbar ist. Das U-Profil 30 nimmt zwischen den Schenkeln das Lichtübertragungsmedium 2 auf, das bündig an den Schenkeln anliegt. Die Abdichtung des Profils mit dem Lichtübertragungsmedium 2 erfolgt mit einem Kleber. Beide Teile bilden somit einen Hohlraum 7, der wieder einen "Lichtschlauch" 22 aufnimmt. Zum Erreichen eines Farbeindrucks ist das Lichtübertragungsmedium entsprechend gefärbt. Um zu verhindern, dass Licht direkt von der Lichtquelle an die lichtabgebende Oberfläche abgegeben wird, ist der "Lichtschlauch" 22 durch eine lichtundurchlässige Abdeckleiste 33 abgeschattet. Das Licht gelangt somit erst nach Reflexion oder Streuung an den Innenseiten des U-Profils 30 zur lichtabgebenden Oberfläche des Lichtleitmediums 2. An das U-Profil 30 ist an beide Seiten ein Rechteck-Profil 31 angeschweißt, welches jeweils einen Flansch 32 aufweist. Der Abstand zwischen dem Flansch 32 bis zur lichtabgebenden Oberfläche 3 des Lichtübertragungsmediums entspricht im Wesentlichen der Höhe der Pflastersteine, sodass die Pflastersteine auf dem Flansch 32 aufliegen und damit das Bauelement in seiner Gesamtheit im Pflaster fixieren. In einer anderen Ausführungsform ist es auch möglich, dass der Flansch direkt parallel zur Basis 34 des U-Profils angeordnet ist, sodass die Basis auf der Pflasterunterlage anliegt und somit das Bauelement wie ein Pflasterelement angelegt werden kann.

Das in Fig. 4 dargestellte Bauelement ist grundsätzlich in beliebiger Länge ausführbar. Zum Erreichen der gewünschten Signalwirkung können auch mehrere derartige Elemente hintereinander oder nebeneinander, insbesondere mit verschiedenen Farbabgaben, angeordnet sein. Die beschriebene Einbringung in ein Pflaster ermöglicht auch das Überfahren des erfindungsgemäßen Bauelements mit einem Fahrzeug.

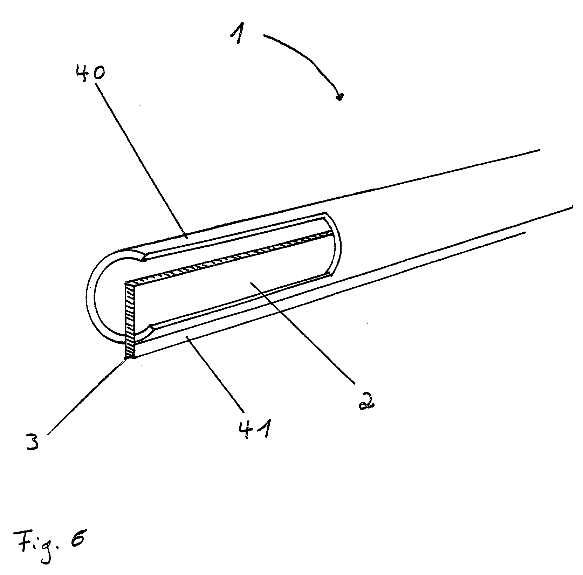

Ein weiteres, in ein Pflaster einlegbares Bauelement 1 zeigt Fig. 5. Wiederum ist zwischen die Schenkel eines U-Profils 30 ein sich über die Länge des U-Profils erstreckendes Lichtübertragungsmedium 2 angeordnet. In der in Fig. 5 dargestellten Ausführungsform verläuft das Lichtübertragungsmedium 2 jedoch bis zur Basis 34 des U-Profils, sodass eine höhere Gewichtsbelastbarkeit der lichtabgebenden Grenzfläche 3 bereitgestellt werden kann. Durch die spezielle Gestaltung des U-Profils mit den nach innen zur Basis zurück verlaufenden Schenkelenden 35 wird jeweils zwischen einem Außenschenkel 37 und einem Längsseitenwandabschnitt 36 des Lichtübertragungsmediums 2 zu dessen beiden Seiten ein Hohlraum 7 erzeugt, der einen "Lichtschlauch" 22 aufnimmt. Die Schenkelenden 35 decken den "Lichtschlauch" 22 ab, sodass Licht nur auf indirektem Wege an die Oberfläche 3 gelangen kann. Das Bauelement 1 kann wieder in ein Pflaster eingelegt werden, wobei mehrere an das U-Profil angebrachte T-Profile 31, von denen nur eines gezeigt ist, zur Fixierung im Pflaster dienen. In bestimmten Ausführungsformen ist es auch möglich, dass im UV emittierende Strahlungsquellen im Hohlraum 7 angeordnet sind und das Lichtübertragungsmedium 2 eine fluoreszierende Substanz im Körper aufweist, welche die aufgenommene UV-Strahlung in sichtbares Licht umwandelt, welches das Lichtübertragungsmedium 2 über die Oberfläche 3 verlässt.

Fig. 6 zeigt in einem Ausschnitt einen erfindungsgemäß gestalteten Handlauf eines Geländers. Der zylinderförmige Handlauf 40 weist ein sich in das Innere des Handlaufs erstreckendes Lichtübertragungsmedium 2 in Form eines langgestreckten, flachen Bretts auf. Das Lichtübertragungsmedium ragt über die Oberfläche des zylinderförmigen Handlaufs 40 hinaus, sodass eine Seitenfläche 41 aus dem Handlauf hervorsteht. Im Innern des hohlen Handlaufs ist ein in der Figur nicht dargestellter "Leuchtdiodenschlauch" angeordnet, sodass das von den Dioden im Leuchtschlauch abgegebene Licht vom Lichtübertragungsmedium 2 aufgenommen und von diesem zur abgesetzten, äußeren Kante außerhalb des Handlaufs geführt wird, wo das Licht nach außen abgegeben wird. Das durch Erwärmung formbare Lichtübertragungsmedium ist auch an Biegungen des Handlaufs anpassbar. Sind keine Leuchmittel im Innern des Handlaufs 40 umfasst, kann in der in Fig. 6 dargestellten Ausführungsform trotzdem eine signalisierende, d.h. lichtabgebende, Kante in Form der Grenzfläche 3 bereitgestellt werden, da Umgebungslicht, welches über die Seitenfläche 41 in das Lichtübertragungsmedium einfällt, von diesem zumindest teilweise zur Grenzfläche 3 geführt wird und dort das Lichtübertragungsmedium verlässt.

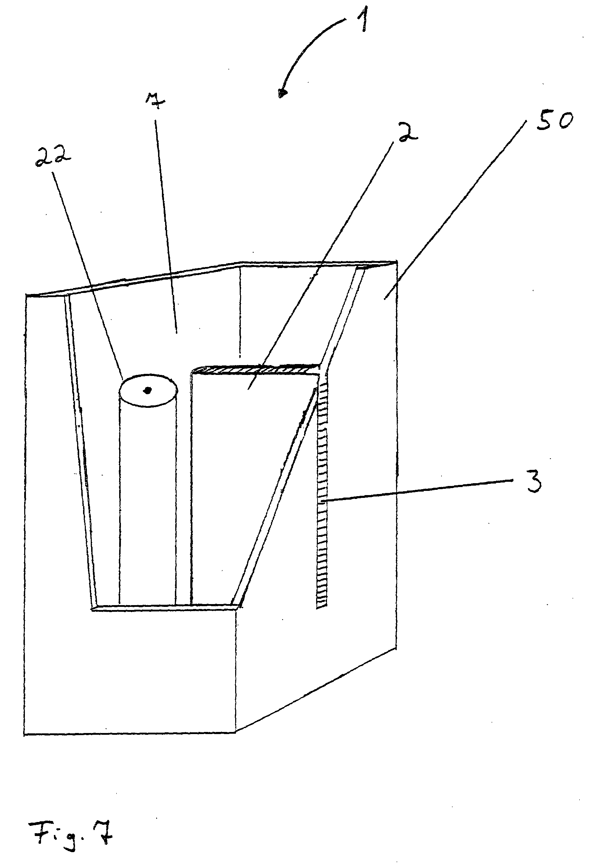

Ein anderes erfindungsgemäßes Bauelement 1, das insbesondere zur Gestaltung von Wänden stapelbar ist, wird in Fig. 7 dargestellt. Es besteht aus einem quaderförmigen, hohlen Grundkörper 50 aus Holz, in welchem der "Lichtschlauch" bzw. das Lichtübertragungsmedium in schon beschriebener Art und Weise eingebracht ist. Zur Vereinfachung der Darstellung sind die zum Verbinden der Bauelemente notwendigen Einrichtungen nicht dargestellt. Ein derartiges Bauelement ist natürlich auch aus Kunststoff oder Metall herstellbar.

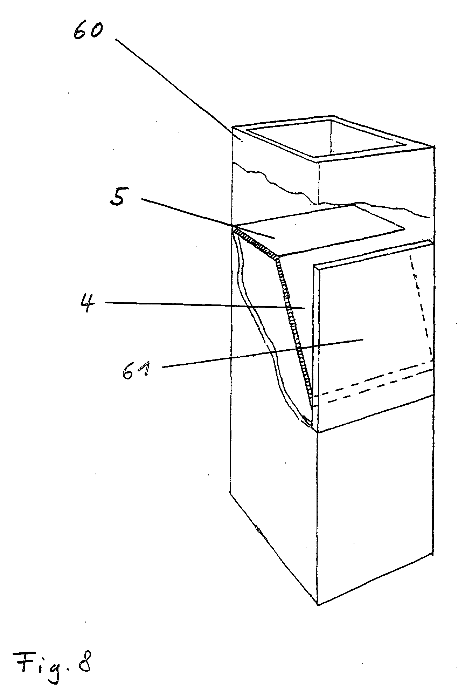

Fig. 8 zeigt ein säulenförmiges Bauelement 60, das keine eigene Lichtquelle aufweist. Im Hohlkörper ist wieder ein Lichtübertragungsmedium 2 angeordnet, das mit einer Grenzfläche bündig zu der im Bild rückseitigen Oberfläche der quaderförmigen Säule liegt. Auf der gegenüberliegenden Seite ist ein Lichtfenster 61 in Form einer Glasscheibe angeordnet, durch welches Umgebungslicht auf den ersten Abschnitt 4 des Lichtübertragungsmediums fallen kann. Über den obenstehend beschriebenen Effekt der Totalreflexion wird zumindest ein Teil des Lichts durch den zweiten Abschnitt 5 des Lichtübertragungsmediums hindurch zur Grenzfläche geführt, wo es das Bauelement verlässt.

In einer nicht dargestellten Ausführungsform eines Bauelements für den Außenbereich ist ein Steinpoller längs in der Achse mit einem Hohlraum ausgestattet. Ein scheibenförmiges Lichtübertragungsmedium, dessen Außenradius dem Radius des zylinderförmigen Pollers entspricht, ist im Poller so angeordnet, dass deren beider Längsachsen zusammenfallen. Im Hohlraum ist eine Lampe derart angeordnet, dass das scheibenförmige Lichtübertragungsmedium im Winkel von 2 *π* im Bereich seines Umfangs homogen Licht zur Ausführung einer Signal- bzw. Hinweisfunktion abgibt.

In besonders gestalteten Ausführungsformen der Erfindung sind optische Einrichtungen umfasst, die das Licht unter Ausnutzung der Brechung oder Reflexion optimiert von der Lichtquelle zum ersten Abschnitt des Lichtübertragungsmediums übertragen, sodass möglichst viel Licht in das Lichtübertragungsmedium eingekoppelt wird. Derartige lichtablenkende Einrichtungen umfassen beispielsweise Spiegel oder Linsen, insbesondere Fresnellinsen.

### Bezugszeichenliste

- 1: Bauelement
- 2: Lichtübertragungsmedium
- 3: lichtabstrahlender Oberflächenabschnitt des Bauelements
- 4: erster Abschnitt des Lichtübertragungsmediums
- 5: zweiter Abschnitt des Lichtübertragungsmediums
- 6: Mittel zum Erzeugen und Abgeben von elektromagnetischer Strahlung
- 7: Hohlraum
- 20: Trittfläche einer Treppenstufe
- 21: Vorderfläche einer Treppenstufe
- 22: Einrichtung zur Aufnahme von Leuchtmittel/"Lichtschlauch"
- 30: U-förmiges Metallprofil
- 31: T-Profil
- 32: Flansch
- 33: Abdeckleiste
- 34: Basis der Metallprofils
- 35: Schenkelendabschnitte des Metallprofils
- 36: Seitenwand des Lichtübertragungsmediums
- 37: Außenschenkel des U-Profils
- 40: Handlauf eines Geländers
- 41: hervorstehender Abschnitt des Lichtübertragungsmediums
- 50: quaderförmiges Bauelement
- 60: Säule
- 61: Glasfenster

## Patentansprüche

1. Innen- und/oder Außenbereich-Bauelement (1) mit Signal- und Hinweisfunktion aus einem lichtundurchlässigen Material, und mit einem vorgegebenen, lichtabstrahlenden Oberflächenabschnitt (3), der durch eine Grenzfläche eines sich in das Innere hinein erstreckenden Lichtübertragungsmediums (2) gebildet wird, wobei das Lichtübertragungsmedium beabstandet zum lichtabstrahlenden Oberflächenabschnitt einen ersten Abschnitt (4, 41) aufweist, an welchem elektromagnetische Strahlung aufnehmbar ist und einen zweiten Abschnitt (5), in welchem Licht zum lichtabstrahlenden Oberflächenabschnitt (3) führbar ist.

2. Innen- und/oder Außenbereich-Bauelement (1) nach Anspruch 1, **gekennzeichnet durch** ein benachbart zum ersten Abschnitt (4, 41) des Lichtübertragungsmediums (2) angeordnetes Mittel (6) zum Erzeugen von elektromagnetischer Strahlung, wobei die erzeugte elektromagnetische Strahlung wenigstens teilweise vom ersten Abschnitt (4, 41) des Lichtübertragungsmediums (2) aufnehmbar ist.

3. Innen- und/oder Außenbereich-Bauelement (1) nach Anspruch 1 oder 2, **dadurch gekennzeichnet,** dass das Mittel (6) zum Erzeugen der elektromagnetischen Strahlung zusammen mit dem zweiten Abschnitt (5) des Lichtübertragungsmediums (2) in einem geschlossenen Hohlraum (7) angeordnet ist.

4. Innen- und/oder Außenbereich-Bauelement (1) nach Ansprüchen 1, 2 oder 3, **dadurch gekennzeichnet,** dass elektromagnetische Strahlung im Lichtübertragungsmedium (2), insbesondere im zweiten Abschnitt (5), im Wesentlichen über den Effekt der Totalreflexion an zugeordnete Totalreflexionsflächen führbar ist.

5. Innen- und/oder Außenbereich-Bauelement (1) nach Anspruch 4, **dadurch gekennzeichnet,** dass zumindest teilweise an Totalreflexionsflächen des Lichtübertragungsmediums (2) ein Material mit niedrigerem Brechungsindex als der Brechungsindex des Lichtübertragungsmediums im Innern umfasst ist, wobei das Material zwischen dem lichtführenden Abschnitt (5) des Lichtübertragungsmediums (2) und einer an das Material angrenzenden, lichtundurchlässigen Wand angeordnet ist.

6. Innen- und/oder Außenbereich-Bauelement (1) nach einem der Ansprüche 1 bis 5, **dadurch gekennzeichnet,** dass das Lichtübertragungsmedium (2) im zweiten Abschnitt (5) zumindest an einer seitlichen Begrenzungsfläche eine aufgerauhte, lichtstreuende Oberfläche aufweist.

7. Innen- und/oder Außenbereich-Bauelement (1) nach einem der Ansprüche 1 bis 6, **dadurch gekennzeichnet,** dass das Lichtübertragungsmedium (2) eine Substanz, insbesondere eine fluoreszierende Substanz, aufweist, welche die im ersten Abschnitt (4) des Lichtübertragungsmediums aufgenommene elektromagnetische Strahlung in Licht mit einer Wellenlänge im Sichtbaren umwandelt.

8. Innen- und/oder Außenbereich-Bauelement (1) nach einem der Ansprüche 1 bis 7, **dadurch gekennzeich net,** dass das Lichtübertragungsmedium (2) gefärbt ist.

9. Innen- und/oder Außenbereich-Bauelement (1) nach einem der Ansprüche 1 bis 8, **dadurch gekennzeichnet,** dass das lichtundurchlässige Material Metall, Kunststoff, Glas, Stein, Holz und/oder Beton umfasst.

10. Innen- und/oder Außenbereich-Bauelement (1) nach einem der Anprüche 1 bis 9, **dadurch gekennzeichnet,** dass das Lichtübertragungsmedium (2) aus der Oberfläche des lichtundurchlässigen Materials herausragt.

11. Innen- und/oder Außenbereich-Bauelement (1) nach einem der Ansprüche 2 bis 10, **dadurch gekennzeichnet,** dass das Mittel (6) zum Erzeugen von elektromagnetischer Strahlung eine Vielzahl von, entlang einer Längsachse hintereinander angeordneten Lampen, insbesondere Glimmlampen oder Leuchtdioden (LED), mit einer Anschlusseinrichtung zum Anschliessen an eine elektrische Stromversorgung aufweist.

12. Innen- und/oder Außenbereich-Bauelement (1) nach einem der vorstehenden Ansprüche 2 bis 11, **gekennzeichnet durch** ein U-förmiges Metallprofil (30), zwischen dessen Schenkeln in deren Längsstreckung ein an die Innenschenkel angrenzendes Lichtübertragungsmedium (2) angeordnet ist, wobei das Profil (3) und das Lichtübertragungsmedium (2) Begrenzungen des zumindest einen Hohlraums (7) in Längserstreckung des Profils bilden, in welchem das Mittel (6) zum Abgeben von elektromagnetischer Strahlung angeordnet ist und das Bauelement in ein Boden-Pflaster einlegbar ist.

13. Innen- und/oder Außenbereich-Bauelement (1) nach Anspruch 11 und 12, **dadurch gekennzeichnet,** dass die Vielzahl der Lampen entlang der Längsachse des Metallprofils (30) angeordnet sind und das Lichtübertragungsmedium (2) auf der diesen zugewandten Seite zwei aufeinander zulaufende Flächen mit einer gemeinsamen Kante aufweist.

14. Innen- und/oder Außenbereich-Bauelement (1) nach einem der vorstehenden Ansprüche 12 oder 13, **dadurch gekennzeichnet,** dass sich das Lichtübertragungsmedium (2) quaderförmig bis an die Basis (34) des U-Profils erstreckt, wobei Wandabschnitte des Metallprofils zusammen mit beiden Längsseitenwandabschnitten (36) des Lichtübertragungsmediums (2) zwei sich in der Längsachse des U-Profils und des Lichtübertragungsmediums erstreckende und jeweils ein Mittel (22) zur Abgabe von elektromagnetischer Strahlung aufnehmende Hohlräume (7) bilden, wobei Licht durch die den jeweiligen Hohlraum begrenzende Seitenfläche (36) des Lichtübertragungsmediums (2) in dieses einführbar ist.

15. Innen- und/oder Außenbereich-Bauelement (1) nach einem der vorstehenden Ansprüche 3 bis 14, **gekennzeichnet durch** eine Treppenstufe, in dessen Trittfläche (20) oder in dessen Vorderfläche (21) zumindest ein sich in die Treppenstufe oder Vorderfläche hinein erstreckendes Lichtübertragungsmedium (2) mit einer Treppenfläche (20, 21) im Wesentlichen bündig angeordnet ist, wobei das Lichtübertragungsmedium (2) innerhalb der Treppenstufe in den Hohlraum (7) hineinragt, der sich in Längsrichtung der Treppenstufe erstreckt.

16. Innen- und/oder Außenbereich-Bauelement (1) nach Anspruch 15, **gekennzeichnet durch** ein brettförmiges Lichtübertragungsmedium (2), das mit einer Kante parallel zu einer Längsfläche der Trittfläche (20) oder der Treppenvorderfläche (21) angeordnet ist.

17. Innen- und/oder Außenbereich-Bauelement (1) nach Anspruch, **gekennzeichnet durch** mehrere zylinderförmige sich senkrecht in die Treppenstufe hinein erstrekkende Lichtübertragungsmedien (2), die alle jeweils mit einer Seitenfläche im Wesentlichen bündig mit einer Treppenfläche (20, 21) angeordnet sind und in den Hohlraum hineinragen.

18. Innen- und/oder Außenbereich-Bauelement (1) nach einem der Anprüche 1 bis 17, **gekennzeichnet durch** eine im Wesentlichen zylinderförmige Gestalt des Bauelements (1), eine scheibenförmige Gestalt des Lichtübertragungsmediums (2) mit einem axialen Mittelloch, wobei die Längsachsen des Bauelements und des Lichtübertragungsmediums zusammenfallen und im Bereich des Mittellochs das Mittel (6) zur Abgabe von elektromagnetischer Strahlung platziert ist.

19. Innen- und/oder Außenbereich-Bauelement (1) nach einem der Anprüche 1 bis 18, **gekennzeichnet durch** mehrere Lichtübertragungsmedien (2), an deren jeweiligen lichtabstrahlenden Grenzflächen (3) Licht unterschiedlicher Wellenlänge abgebbar ist.

20. Innen- und/oder Außenbereich-Bauelement (1) nach einem der Anprüche 1 bis 19, **gekennzeichnet durch** Mittel (41, 61) zum Zuführen von Umgebungslicht an den ersten Abschnitt des Lichtübertragungsmediums.
